# EUROPEAN PATENT SPECIFICATION

(11) **EP 4 339 015 B1**
(45) Date of publication and mention of the grant of the patent: **27.08.2025**
(21) Application number: 22461604.5
(22) Date of filing: 13.09.2022
(51) Int. Cl.: B60N 2/28, B60N 2/18

(54) **A MECHANISM FOR A CHILD SAFETY SEAT**
MECHANISMUS FÜR EINEN KINDERSICHERHEITSSITZ
MÉCANISME POUR SIÈGE DE SÉCURITÉ ENFANT

(43) Date of publication of application: 20.03.2024
(73) Proprietor: Simon sp. z o. o., 91-341 Lodz (PL)
(72) Inventor: DANIEL, Marcin, 90-553 Lodz (PL); CZYBIS, Witold, 94-109 Lodz (PL)
(74) Representative: Kancelaria Eupatent.pl Sp. z.o.o

(56) References cited:
- EP-A1- 2 662 235
- GB-A- 2 405 085
- US-A- 5 746 478

## Description

### TECHNICAL FIELD

The present invention relates to a mechanism for a child safety seat, allowing reclining and/or rotation of the seat.

### BACKGROUND ART

Child safety seats are used for transporting children in vehicles. They are designed specifically to protect children from injury or death during vehicle collisions. Commonly, the child safety seats have a chassis which is being fixed into the car by a main seat belt or a specially designed fixing system (such as the ISOFIX). Thus, usually the child safety seats have their own passive restraints, which ought to be adjusted individually for each child.

Some of the child safety seats have reclining mechanisms for adjusting an angle of inclination of the backrest or of the bottom of the child seat. However, a common disadvantage of such seats is that during the inclination adjustment, the angle between the backrest and the bottom of the seat changes which results in the necessity to adjust the restraints (child safety seat belts) and the body supporting elements of the seat. In some situations, adjustment of the adult seat belt which holds the child safety seat is also necessary. An example of a child vehicle seat which can be tilted is described in EP2662235A1.

### SUMMARY

There is a need to provide a new design of a reclining mechanism for a child safety seat wherein at least some of the problems discussed in the background would be at least reduced.

The object of the invention is a mechanism for a child safety seat, wherein the child safety seat has a base and a seating portion with a backrest. The mechanism comprises a first longitudinal support located at a first side of the base; a second longitudinal support located at a second side of the base opposite the first side and in parallel to the first longitudinal support; a platform for mounting the seating portion with the backrest thereon, wherein the platform is mounted to the longitudinal supports; wherein the first longitudinal support has a bottom portion with a pair of first longitudinal sockets located at its first end and a first pivotable mount located at its second end, and has a top portion with a first end mounted slidably and pivotally to the first longitudinal sockets and a second end mounted pivotally to a first bracket which is mounted pivotally to the first pivotable mount; wherein the second longitudinal support has a bottom portion with a pair of second longitudinal sockets located at its first end and a second pivotable mount located at its second end, and has a top portion with a first end mounted slidably and pivotally to the second longitudinal sockets and a second end mounted pivotally to a second bracket which is mounted pivotally to the second pivotable mount; a lever mounted to the platform between the first longitudinal support and the second longitudinal support, for lifting and lowering a front end of the platform; an extendable element which is at a first end mounted pivotally to the base and at a second end mounted pivotally to the lever; and a release button for activating the extendable element to push the platform towards the inclined position.

The extendable element can be a gas spring.

The lever may protrude outside the base.

Each longitudinal socket of the bottom portion may have a length equal to a length of the top portion plus a length of the bracket of the corresponding longitudinal support.

The mechanism may further comprise a rotating mechanism located in the base for rotating the seating portion with the back rest along an axis perpendicular to the platform.

The rotating mechanism may comprise a rotary disc mounted in the base, wherein the seat is mounted on the rotary disc, wherein the rotary disc is rotatable about a vertical axis Y within a given angular range with respect to the base; a side lever with a blocking element, movable with respect to the base between a first position in which the possibility of rotating the rotary disc is blocked and a second position, in which the rotary disc may rotate; wherein the rotary disc has a notch coupled with the blocking element in such a way, that in the first position a tip of the blocking element is located in the notch and in the second position the tip of the blocking element is located outside the notch.

The side lever may comprise a spring, which forces the side lever to automatically return to the first position when the seat is in parallel to the base.

The side lever may have a handle that extends beyond the outline of the base.

The base may comprise two slots one on the left side and one on the right side of the seat, wherein the side lever is detachably fastened in the selected socket.

The rotary disc may have protruding pins located in the first pair of arcuate openings in the platform of the base which constitute a guide for the pin.

The platform may have a second pair of arcuate openings constituting a guide for the pins protruding from the seat.

The invention also relates to a child safety seat comprising the mechanism as described herein.

### BRIEF DESCRIPTION OF DRAWINGS

The invention is shown by means of example embodiments on a drawing, in which:
Figs. 1A, 1B show a reclining mechanism in a straight position;
Figs. 2A-2D show the reclining mechanism in an inclined position;
Fig. 3 shows a child safety seat in a straight position;
Fig. 4 shows the child safety seat in an inclined position.

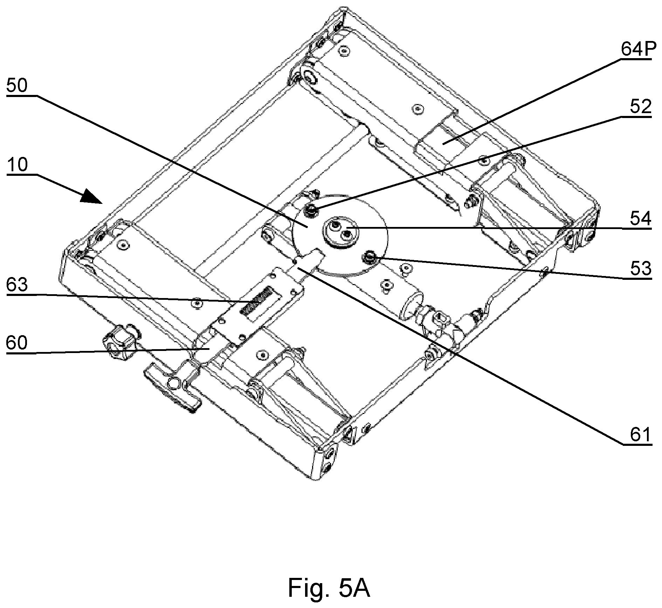

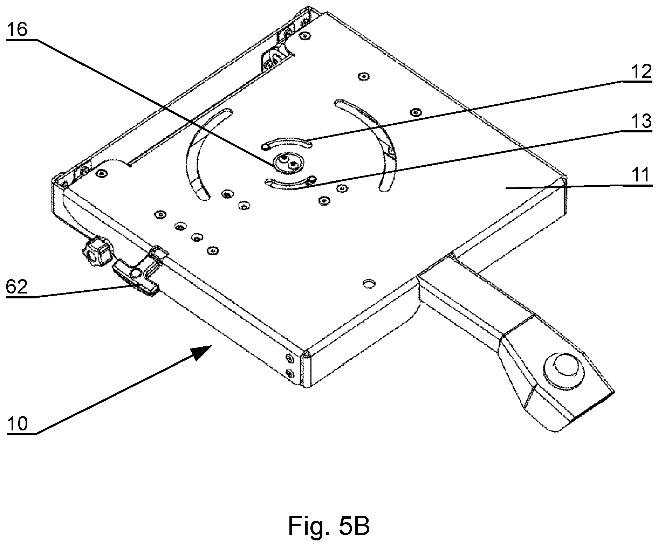

Fig. 5A, 5B show a base with a rotating mechanism set in a first position;

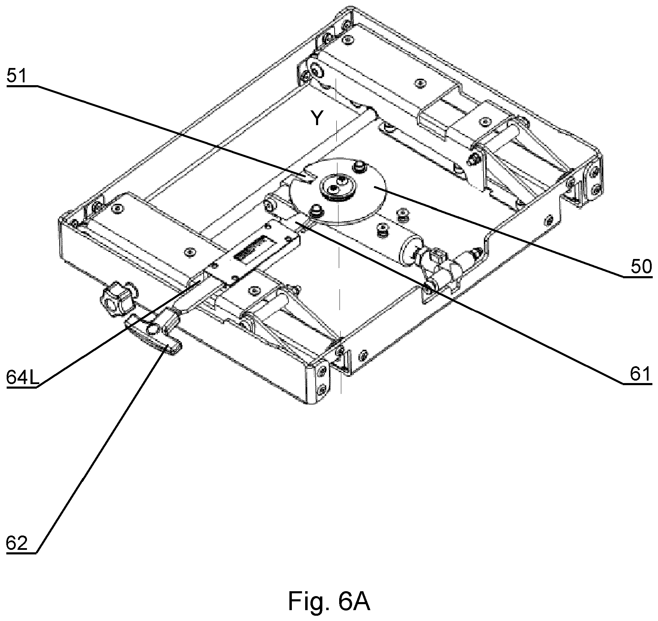

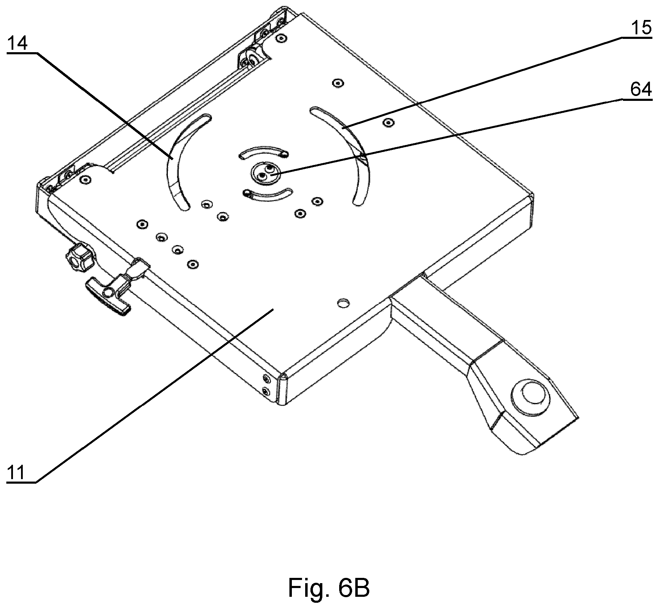

Fig. 6A, 6B show the base with the rotating mechanism set in a second position;

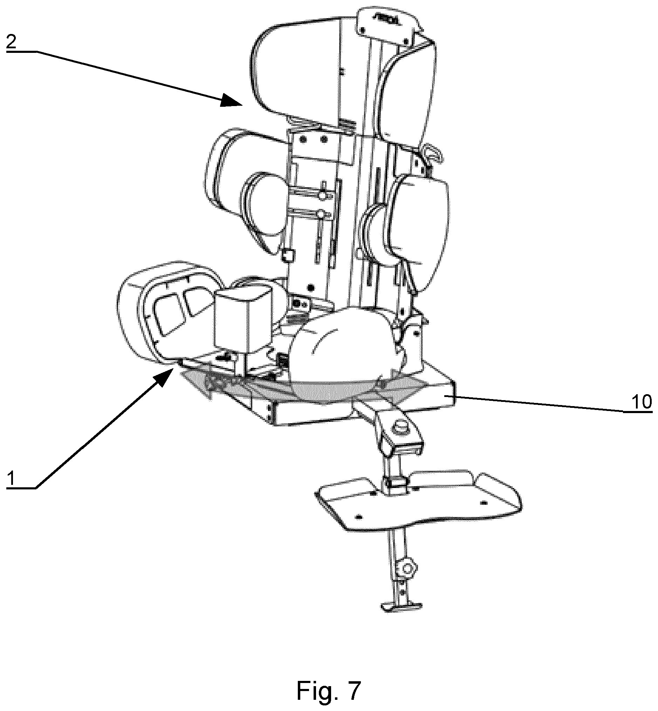

Fig. 7 shows a child safety seat during the change of the position of the seat.

### DETAILED DESCRIPTION

The following detailed description is of the best currently contemplated modes of carrying out the invention. The description is not to be taken in a limiting sense, but is made merely for the purpose of illustrating the general principles of the invention.

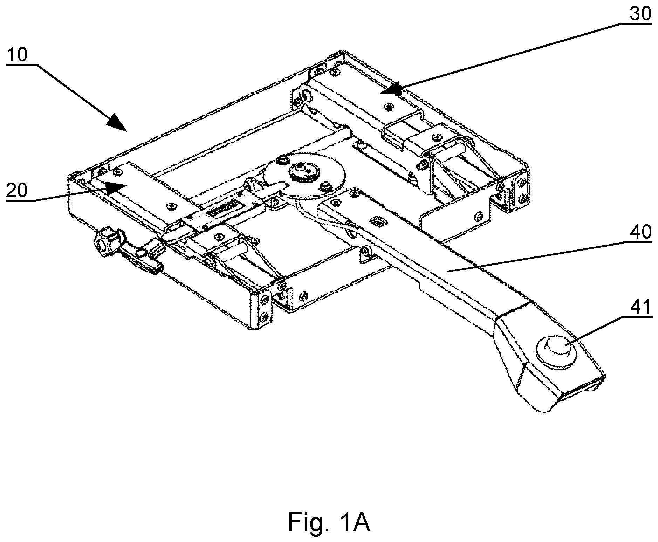

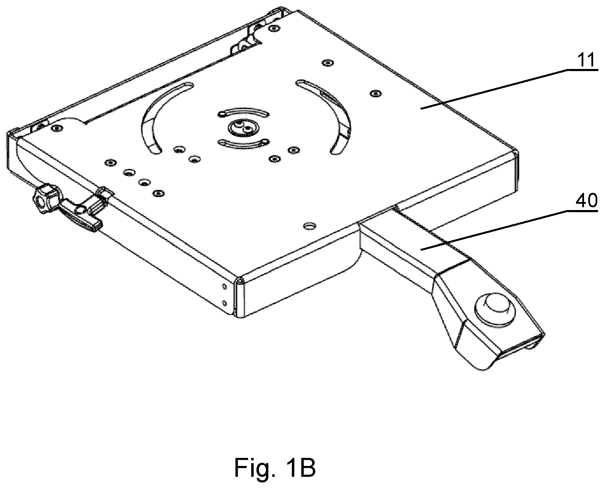

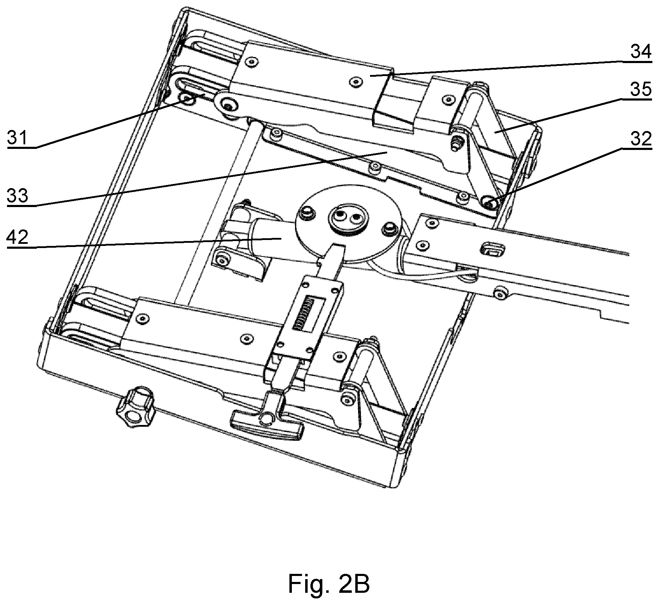

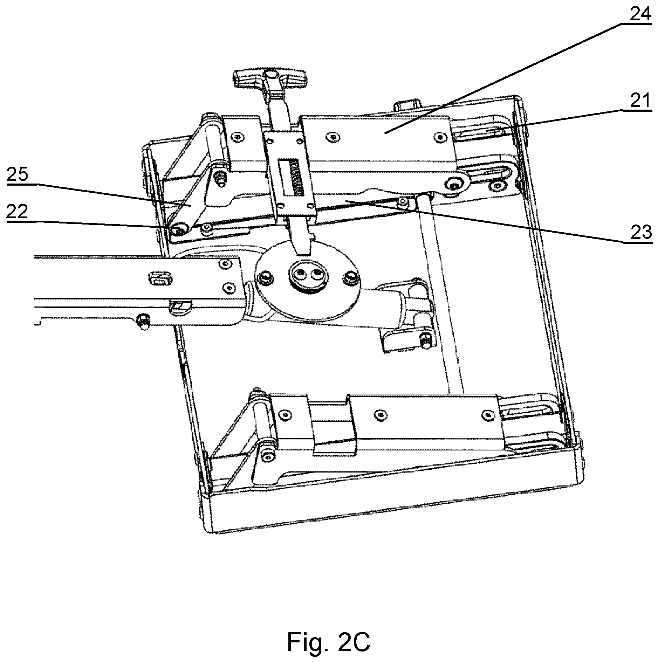

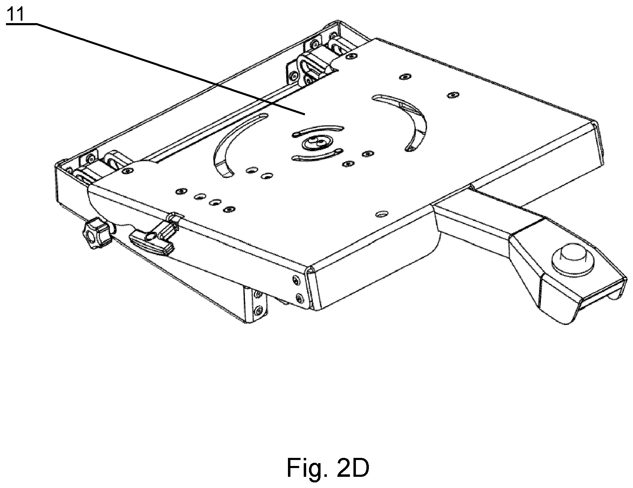

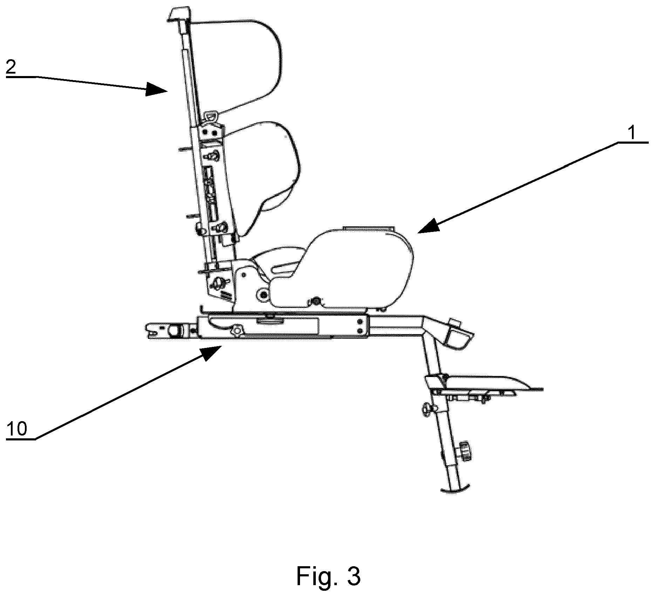

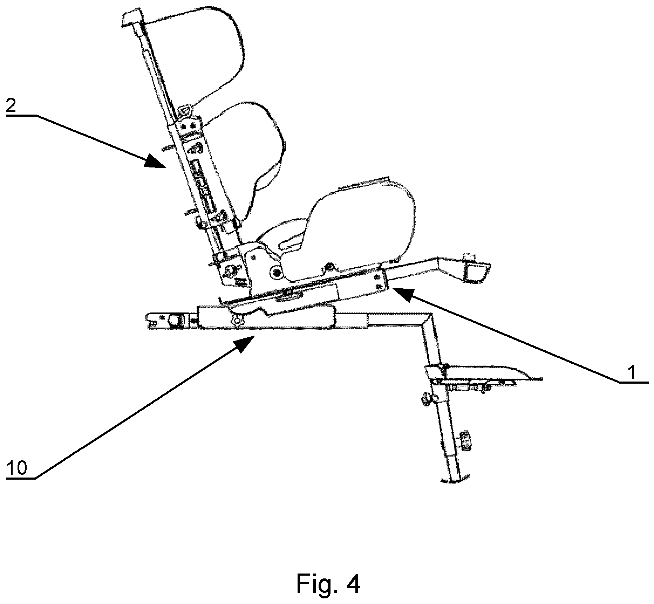

The reclining mechanism, as shown in Figs. 1A-1B and 2A-2D is designed for use with a child safety seat such as shown in Figs. 3 and 4. The child safety seat has a base 10 and a seating portion 1 with a backrest 2.

The reclining mechanism comprises two longitudinal supports 20, 30 located at a first side and a second side of the base 10, respectively. The longitudinal supports 20, 30 are used for mounting thereon a platform 11 for mounting the seating portion 1 with the backrest 2.

The first longitudinal support 20 has a bottom portion 23 with a pair of first longitudinal sockets 21 located at its first end and a first pivotable mount 22 located at its second end. Similarly, the second longitudinal support 30 has a bottom portion 33 with a pair of second longitudinal sockets 31 located at its first end and a second pivotable mount 32 located at its second end. Each of the longitudinal sockets 21, 31 may have a form of a pair of sockets distanced from each other and being in parallel to each other, wherein a bolt for mounting the first end of the top portion 24, 34 is passing through the openings in the respective pair.

The first longitudinal support 20 has a top portion 24 with a first end mounted slidably and pivotally to the first longitudinal sockets 21 and a second end mounted pivotally to a first bracket 25 which is mounted pivotally to the first pivotable mount 22. Similarly, the second longitudinal support 30 has a top portion 34 with a first end mounted slidably and pivotally to the second longitudinal sockets 31 and a second end mounted pivotally to a second bracket 35 which is mounted pivotally to the second pivotable mount 32.

A lever 40 is mounted to the platform 11 between the first longitudinal support 20 and the second longitudinal support 30. The lever 40 is used for lifting and lowering a front end of the platform 11. The lever 40 may protrude outside the base 10 to make it easily accessible for a user. However, in other embodiments the end of the lever 40 may be less accessible to reduce a risk of its accidental actuation.

An extendable element 42, in this case a pushing gas spring, is pivotally mounted at its first end to the base 10 and at its second end it is mounted pivotally to the lever 40. The extendable element 42 is coupled with a release button 41 that activates the extendable element 42 to push the platform 11 towards the inclined position.

The reclining mechanism enables effecting pivotal movement of the seat i.e. the seating portion 1 along with the backrest 2, namely so-called "tilt" movement, by means of a single lever, while maintaining a constant, unchanged angle between the backrest 2 and the seating portion 1. The advantage of such a solution is that there is no need to adjust the supports that stabilize the torso of the occupant and the harness every time the angle of the seat is changed.

The change of the angle of inclination of the platform 11 which is attached to the surface of the longitudinal supports 20, 30 (and the seating portion with the backrest mounted thereon) is possible by activating the release button 41. This causes activation of the extendable element 42 and in effect causes the lifting movement. The force that causes the lift of the front portion of the seat is provided by the extendable element 42 at least in part, therefore facilitates the handling of the safety seat by the user. After releasing the extendable element 42, the lever 40 can be pushed upwards, which causes the second ends of the longitudinal supports 20, 30 to move upwards together with the front end of the platform 11, while the first ends of the longitudinal supports 20, 30 slide forward and pivot in the longitudinal sockets 21, 31. As a result, the seat is moved forward and the front part of the seat is moved upwards providing an inclination to the seat.

The bottom portions 23, 33 of the longitudinal supports 20, 30 are mounted to the base 10. Preferably the bottom portions 23, 33 are mounted to the bottom side of the base 10 by means of screws or nuts and bolts or rivets. Preferably each longitudinal socket 21, 31 of the bottom portion 23, 33 has a length substantially equal to a length of the top portion 24, 34 plus a length of the bracket 25, 35 respectively. Thus, when the platform 11 is in a horizontal position, the top portion 24, 34 is substantially aligned with the bracket 25, 35. On the other hand when the platform 11 is in an inclined position, the top portion 24, 34 and the bracket 25, 35 respectively are arranged such that an angle α between them is lower than 180 degrees.

In other embodiments each bottom portion 23, 33 may constitute separate mountings - the first being the longitudinal sockets 21, 31 and the second being the pivotal mount 22, 32. Then the distance between the longitudinal sockets 21, 31 and the pivotal mount 22, 32 is such that when the platform 11 is in a horizontal position the top portion 24, 34 is substantially aligned with the bracket 25, 35 respectively.

The base 10 may have a form of a rectangular plate, constituting the bottom side of the base 11, with four side walls, wherein a height of the side walls is substantially equal to a height of the longitudinal supports 20, 30.

The platform 11 can be mounted to the surface of the top portions 24, 34 by means of screws or nuts and bolts or rivets.

The seating portion 1 with the backrest 2 may be fixed immovably to the platform 11 or may be mounted rotatably with respect to the platform 11 by means of a rotating mechanism to allow rotation of the seat along an axis perpendicular to the platform 11.

The rotating mechanism allows the seat (i.e. the seating portion 1 with the backrest 2) to be rotated about a vertical axis Y by a desired angle, for example 80, 90 or 100 degrees, with respect to the base 10 which is attached to the vehicle seat. The rotation of the seat facilitates accommodating the child in the seat. Thus, the seat can be set to a first position (i.e. the driving position - at an angle of 0 degrees with respect to the base 10), in which it faces the driving direction of the vehicle, and from said first position it can be smoothly rotated to a second position (i.e. to the entry/exit position), in which it is oriented towards the vehicle door and thus transversely to the driving direction. The first position may be locked (so that the seat does not deflect from this position), wherein the second position does not have to be locked (so that the seat may be easily and quickly turned back to the first position and locked in that first position). Thus, the seat 2 is moved to the second position in order to facilitate accommodating the child in the seat. After fastening the child with the belts, the seat should be set to the first position to start driving. Again, in order to facilitate removing the child from the seat, the seat shall be moved to the second position.

A rotary disc 50 is mounted in the base, wherein the seat 1 is mounted on the rotary disc 50. The rotary disc 50 is rotatable about the vertical axis Y in the range of a desired angle, for example 80 degrees with respect to the base 10, thus allowing the seat to be rotated.

The rotary disc 50 has a notch 51 into which a locking element 61 mounted on a side lever 60 may be received. The side lever 60 is movable with respect to the base 10 between a first position wherein the rotation of the rotary disc 50 is blocked, because a tip of the locking element 61 located in the notch 51, and a second position wherein the rotary disc 50 may rotate as the tip of locking element 61 is outside the notch 51.

The side lever 60 comprises a spring 63 which biases the side lever 60 to return to the first position when the seat is in the vehicle driving position, thereby facilitating the operation of the mechanism. After the side lever 60 is extended (i.e. moved to its second position) and the seat 2 is rotated beyond its first position (i.e. by an angle greater than zero degrees), the tip of the locking element 61 abuts the outer edge of the rotary disc 50, thereby maintaining the side lever 60 in the second position. After rotating the seat 1 to its first position, the spring 63 causes the side lever 60 to return to the first position, thereby causing the tip of the locking element 61 to slide into the notch 51 thereby blocking the possibility of rotation of the seat.

In the presented example, the side lever 60 may be located on a side portion of the base and has a handle 62 extending beyond the outline of the base 10 to facilitate the movement of the side lever 60 to its second position. However, various other positions for the lever are possible, for example hidden so as to prevent accidental displacement of the side lever 60.

The rotary disc 50 is mounted rotatably to the platform 11 by means of a ring 54, which protrudes through a central opening 16 of the platform 11. The seat 1 is mounted to the upper side of the ring 54.

The range of rotation of the rotary disc 50 is defined by the pins 52, 53 protruding from the rotary disc 50, each of which is located in an arcuate opening 12, 13 in the platform 11 of the base, constituting the guide for the respective pin 52, 53. However, various other ways of limiting the extent of rotation of the disc 50 are possible.

The platform 11 further comprises a second pair of arcuate openings 14, 15 which guide the bolts protruding from the underside of the seat. This allows to increase the stability of the seat movement with respect to the base 10.

Both the first pair and the second pair of arcuate openings limit the rotation of the seat to a range from 0 to a predetermined angle, for example 80 degrees.

Depending on the needs, the side lever may be alternately mounted on the left side of the seat or on the right side of the seat in sockets 64L, 64P configured to receive the side lever 60. In order to change the location of the side lever 60 it is necessary to disconnect the seating portion 1 with the backrest 2 from the base 10 and to remove the platform 11 together with the rotary disk 50. Then, the side lever 60 is removed from one socket 64L by moving the side lever 60 towards the center of the base 10, which is now possible because the rotating disk 50 was previously removed together with the platform 11, to which it can be attached. Then, after placing the side lever 60 on the opposite side of the base 10 in the second socket 64P, it is necessary to rotate the disk 50 so that, when it placed with the platform 11 on the base 10, the notch 51 is directed towards the locking member 61 of the side lever 60. In this case, it may also be necessary to replace the current base 10 with the one that has mirroring arrangement of the openings 12, 13, 14, 15.

Various embodiments of the seat are possible, such as a seat having the reclining mechanism only (without the rotating mechanism), a seat having the rotating mechanism only (without the reclining mechanism) or a seat having both the reclining and rotating mechanism.

While the invention has been described with respect to a limited number of embodiments, it will be appreciated that many variations, modifications and other applications of the invention may be made while remaining within the scope of the claimed invention as recited in the claims.

## Claims

1. A mechanism for a child safety seat, wherein the child safety seat has a base (10) and a seating portion (1) with a backrest (2), the mechanism comprising:
- a first longitudinal support (20) located at a first side of the base (10);
- a second longitudinal support (30) located at a second side of the base (10) opposite the first side and in parallel to the first longitudinal support (20);
- a platform (11) for mounting the seating portion (1) with the backrest (2) thereon, wherein the platform (11) is mounted to the longitudinal supports (20, 30);
- wherein the first longitudinal support (20) has a bottom portion (23) with a pair of first longitudinal sockets (21) located at its first end and a first pivotable mount (22) located at its second end, and has a top portion (24) with a first end mounted slidably and pivotally to the first longitudinal sockets (21) and a second end mounted pivotally to a first bracket (25) which is mounted pivotally to the first pivotable mount (22);
- wherein the second longitudinal support (30) has a bottom portion (33) with a pair of second longitudinal sockets (31) located at its first end and a second pivotable mount (32) located at its second end, and has a top portion (34) with a first end mounted slidably and pivotally to the second longitudinal sockets (31) and a second end mounted pivotally to a second bracket (35) which is mounted pivotally to the second pivotable mount (32);
- a lever (40) mounted to the platform (11) between the first longitudinal support (20) and the second longitudinal support (30), for lifting and lowering a front end of the platform (11);
- an extendable element (42) which is at a first end mounted pivotally to the base (10) and at a second end mounted pivotally to the lever (40); and
- a release button (41) for activating the extendable element (42) to push the platform (11) towards the inclined position.

2. The mechanism according to claim 1 wherein the extendable element (42) is a gas spring.

3. The mechanism according to any of previous claims, wherein the lever (40) protrudes outside the base (10).

4. The mechanism according to any of previous claims, wherein each longitudinal socket (21, 31) of the bottom portion (23, 33) has a length equal to a length of the top portion (24, 34) plus a length of the bracket (25, 35) of the corresponding longitudinal support (20, 30).

5. The mechanism according to any of previous claims, further comprising a rotating mechanism located in the base (10) for rotating the seating portion (1) with the back rest (2) along an axis perpendicular to the platform (11).

6. The mechanism according to claim 5, wherein the rotating mechanism comprises:
- a rotary disc (50) mounted in the base (10), wherein the seat is mounted on the rotary disc (50), wherein the rotary disc (50) is rotatable about a vertical axis Y within a given angular range with respect to the base (10);
- a side lever (60) with a blocking element (61), movable with respect to the base (10) between a first position in which the possibility of rotating the rotary disc (50) is blocked and a second position, in which the rotary disc (50) may rotate;
- wherein the rotary disc (50) has a notch (51) coupled with the blocking element (61) in such a way, that in the first position a tip of the blocking element (61) is located in the notch (51) and in the second position the tip of the blocking element (61) is located outside the notch (51).

7. The mechanism according to claim 6, wherein the side lever (60) comprises a spring (63), which forces the side lever (60) to automatically return to the first position when the seat is in parallel to the base.

8. The mechanism according to any of claims from 6 to 7, wherein the side lever has a handle (62) that extends beyond the outline of the base (10).

9. The mechanism according to any of claims from 6 to 8, wherein the base (10) comprises two slots (64L, 64P) one on the left side and one on the right side of the seat, wherein the side lever (60) is detachably fastened in the selected socket (64L, 64P).

10. The mechanism according to any of claims from 6 to 9, wherein the rotary disc (50) has protruding pins (52, 53) located in the first pair of arcuate openings (12, 13) in the platform (11) of the base (10) which constitute a guide for the pin (52, 53).

11. The mechanism according to any of claims from 6 to 10, wherein the platform (11) has a second pair of arcuate openings (14, 15) constituting a guide for the pins protruding from the seat (1).

12. A child safety seat comprising the mechanism according to any of previous claims.

## Patentansprüche

1. Mechanismus für einen Kindersicherheitssitz, wobei der Kindersicherheitssitz eine Basis (10) und einen Sitzabschnitt (1) mit einer Rückenlehne (2) aufweist, wobei der Mechanismus Folgendes umfasst:
- einen ersten Längsträger (20), der sich an einer ersten Seite der Basis (10) befindet;
- einen zweiten Längsträger (30), der sich an einer zweiten Seite der Basis (10) gegenüber der ersten Seite und parallel zu dem ersten Längsträger (20) befindet;
- eine Plattform (11) zum Montieren des Sitzabschnitts (1) mit der Rückenlehne (2) daran, wobei die Plattform (11) an den Längsträgern (20, 30) montiert ist;
- wobei der erste Längsträger (20) einen unteren Abschnitt (23) mit einem Paar von ersten Längsbuchsen (21), die sich an seinem ersten Ende befinden, und einer ersten schwenkbaren Montageeinrichtung (22), die sich an seinem zweiten Ende befindet, aufweist und einen oberen Abschnitt (24) mit einem ersten Ende, das verschiebbar und schwenkend an den ersten Längsbuchsen (21) montiert ist, und einem zweiten Ende, das schwenkend an einer ersten Halterung (25) montiert ist, die schwenkend an der ersten schwenkbaren Montageeinrichtung (22) montiert ist, aufweist;
- wobei der zweite Längsträger (30) einen unteren Abschnitt (33) mit einem Paar von zweiten Längsbuchsen (31), die sich an seinem ersten Ende befinden, und einer zweiten schwenkbaren Montageeinrichtung (32), die sich an seinem zweiten Ende befindet, aufweist und einen oberen Abschnitt (34) mit einem ersten Ende, das verschiebbar und schwenkend an den zweiten Längsbuchsen (31) montiert ist, und einem zweiten Ende, das schwenkend an einer zweiten Halterung (35) montiert ist, die schwenkend an der zweiten schwenkbaren Montageeinrichtung (32) montiert ist, aufweist;
- einen Hebel (40), der an der Plattform (11) zwischen dem ersten Längsträger (20) und dem zweiten Längsträger (30) montiert ist, zum Anheben und Absenken eines vorderen Endes der Plattform (11);
- ein ausziehbares Element (42), das an einem ersten Ende schwenkend an der Basis (10) und an einem zweiten Ende schwenkend an dem Hebel (40) montiert ist; und
- einen Freigabeknopf (41) zum Aktivieren des ausziehbaren Elements (42), um die Plattform (11) in Richtung der geneigten Position zu drücken.

2. Mechanismus nach Anspruch 1, wobei das ausziehbare Element (42) eine Gasfeder ist.

3. Mechanismus nach einem der vorhergehenden Ansprüche, wobei der Hebel (40) außerhalb der Basis (10) hervorsteht.

4. Mechanismus nach einem der vorhergehenden Ansprüche, wobei jede Längsbuchse (21, 31) des unteren Abschnitts (23, 33) eine Länge aufweist, die gleich einer Länge des oberen Abschnitts (24, 34) zuzüglich einer Länge der Halterung (25, 35) des entsprechenden Längsträgers (20, 30) ist.

5. Mechanismus nach einem der vorhergehenden Ansprüche, ferner umfassend einen Drehmechanismus, der sich in der Basis (10) befindet, zum Drehen des Sitzabschnitts (1) mit der Rückenlehne (2) entlang einer Achse senkrecht zu der Plattform (11).

6. Mechanismus nach Anspruch 5, wobei der Drehmechanismus Folgendes umfasst:
- eine Drehscheibe (50), die in der Basis (10) montiert ist, wobei der Sitz an der Drehscheibe (50) montiert ist, wobei die Drehscheibe (50) um eine vertikale Achse Y innerhalb eines gegebenen Winkelbereichs in Bezug auf die Basis (10) drehbar ist;
- einen Seitenhebel (60) mit einem Blockierelement (61), der in Bezug auf die Basis (10) zwischen einer ersten Position, in der die Möglichkeit zum Drehen der Drehscheibe (50) blockiert ist, und einer zweiten Position, in der sich die Drehscheibe (50) drehen kann, bewegbar ist;
- wobei die Drehscheibe (50) eine Kerbe (51) aufweist, die derart mit dem Blockierelement (61) gekoppelt ist, dass sich in der ersten Position eine Spitze des Blockierelements (61) in der Kerbe (51) befindet und sich in der zweiten Position die Spitze des Blockierelements (61) außerhalb der Kerbe (51) befindet.

7. Mechanismus nach Anspruch 6, wobei der Seitenhebel (60) eine Feder (63) umfasst, die den Seitenhebel (60) zwingt, automatisch in die erste Position zurückzukehren, wenn der Sitz parallel zu der Basis ist.

8. Mechanismus nach einem der Ansprüche 6 bis 7, wobei der Seitenhebel einen Griff (62) aufweist, der sich über den Umriss der Basis (10) hinaus erstreckt.

9. Mechanismus nach einem der Ansprüche 6 bis 8, wobei die Basis (10) zwei Schlitze (64L, 64P) umfasst, einen auf der linken Seite und einen auf der rechten Seite des Sitzes, wobei der Seitenhebel (60) lösbar in der ausgewählten Buchse (64L, 64P) befestigt ist.

10. Mechanismus nach einem der Ansprüche 6 bis 9, wobei die Drehscheibe (50) hervorstehende Stifte (52, 53) aufweist, die sich in dem ersten Paar von bogenförmigen Öffnungen (12, 13) in der Plattform (11) der Basis (10) befinden, die eine Führung für den Stift (52, 53) darstellen.

11. Mechanismus nach einem der Ansprüche 6 bis 10, wobei die Plattform (11) ein zweites Paar von bogenförmigen Öffnungen (14, 15) aufweist, die eine Führung für die Stifte darstellen, die von dem Sitz (1) hervorstehen.

12. Kindersicherheitssitz, umfassend den Mechanismus nach einem der vorhergehenden Ansprüche.

## Revendications

1. Mécanisme pour siège de sécurité enfant, dans lequel le siège de sécurité enfant présente une base (10) et une partie d'assise (1) avec un dossier (2), le mécanisme comprenant :
- un premier support longitudinal (20) situé au niveau d'un premier côté de la base (10) ;
- un second support longitudinal (30) situé au niveau d'un second côté de la base (10) opposé au premier côté et parallèle au premier support longitudinal (20) ;
- une plateforme (11) pour monter la partie d'assise (1) avec le dossier (2) sur celle-ci, dans lequel la plateforme (11) est montée sur les supports longitudinaux (20, 30) ;
- dans lequel le premier support longitudinal (20) présente une partie inférieure (23) avec une paire de premières douilles longitudinales (21) situées au niveau de sa première extrémité et une première monture pivotante (22) située au niveau de sa seconde extrémité, et présente une partie supérieure (24) avec une première extrémité montée de manière coulissante et pivotante sur les premières douilles longitudinales (21) et une seconde extrémité montée de manière pivotante sur un premier élément de soutien (25) qui est monté de manière pivotante sur la première monture pivotante (22) ;
- dans lequel le second support longitudinal (30) présente une partie inférieure (33) avec une paire de secondes douilles longitudinales (31) situées au niveau de sa première extrémité et une seconde monture pivotante (32) située au niveau de sa seconde extrémité, et présente une partie supérieure (34) avec une première extrémité montée de manière coulissante et pivotante sur les secondes douilles longitudinales (31) et une seconde extrémité montée de manière pivotante sur un second élément de soutien (35) qui est monté de manière pivotante sur la seconde monture pivotante (32) ;
- un levier (40) monté sur la plateforme (11) entre le premier support longitudinal (20) et le second support longitudinal (30), destiné à soulever et abaisser une extrémité avant de la plateforme (11) ;
- un élément extensible (42) qui est monté de manière pivotante au niveau d'une première extrémité sur la base (10) et monté de manière pivotante au niveau d'une seconde extrémité sur le levier (40) ; et
- un bouton de libération (41) destiné à activer l'élément extensible (42) pour pousser la plateforme (11) vers la position inclinée.

2. Mécanisme selon la revendication 1, dans lequel l'élément extensible (42) est un ressort à gaz.

3. Mécanisme selon l'une quelconque des revendications précédentes, dans lequel le levier (40) fait saillie à l'extérieur de la base (10).

4. Mécanisme selon l'une quelconque des revendications précédentes, dans lequel chaque douille longitudinale (21, 31) de la partie inférieure (23, 33) présente une longueur égale à une longueur de la partie supérieure (24, 34) plus une longueur de l'élément de soutien (25, 35) du support longitudinal correspondant (20, 30).

5. Mécanisme selon l'une quelconque des revendications précédentes, comprenant en outre un mécanisme de rotation situé dans la base (10) destiné à faire tourner la partie d'assise (1) avec le dossier (2) le long d'un axe perpendiculaire à la plateforme (11).

6. Mécanisme selon la revendication 5, dans lequel le mécanisme de rotation comprend :
- un disque rotatif (50) monté dans la base (10), dans lequel le siège est monté sur le disque rotatif (50), dans lequel le disque rotatif (50) peut tourner autour d'un axe vertical Y dans une plage angulaire donnée par rapport à la base (10) ;
- un levier latéral (60) avec un élément de blocage (61), mobile par rapport à la base (10) entre une première position où la possibilité de faire tourner le disque rotatif (50) est bloquée et une seconde position, où le disque rotatif (50) peut tourner ;
- dans lequel le disque rotatif (50) présente une encoche (51) couplée à l'élément de blocage (61) de sorte que, dans la première position, une pointe de l'élément de blocage (61) est située dans l'encoche (51) et que, dans la seconde position, la pointe de l'élément de blocage (61) est située à l'extérieur de l'encoche (51).

7. Mécanisme selon la revendication 6, dans lequel le levier latéral (60) comprend un ressort (63), qui force le levier latéral (60) à revenir automatiquement à la première position lorsque le siège est parallèle à la base.

8. Mécanisme selon l'une quelconque des revendications 6 à 7, dans lequel le levier latéral présente une poignée (62) qui s'étend au-delà du contour de la base (10).

9. Mécanisme selon l'une quelconque des revendications 6 à 8, dans lequel la base (10) comprend deux fentes (64L, 64P) une sur le côté gauche et une sur le côté droit du siège, dans lequel le levier latéral (60) est fixé de manière amovible dans la douille sélectionnée (64L, 64P).

10. Mécanisme selon l'une quelconque des revendications 6 à 9, dans lequel le disque rotatif (50) présente des broches saillantes (52, 53) situées dans la première paire d'ouvertures arquées (12, 13) dans la plateforme (11) de la base (10) qui constituent un guide pour la broche (52, 53).

11. Mécanisme selon l'une quelconque des revendications 6 à 10, dans lequel la plateforme (11) présente une seconde paire d'ouvertures arquées (14, 15) constituant un guide pour les broches faisant saillie du siège (1).

12. Siège de sécurité enfant comprenant le mécanisme selon l'une quelconque des revendications précédentes.
